# EUROPÄISCHE PATENTSCHRIFT

(11) **EP 3 350 045 B1**
(45) Veröffentlichungstag und Bekanntmachung des Hinweises auf die Patenterteilung: **11.09.2019**
(21) Anmeldenummer: 16767257.5
(22) Anmeldetag: 16.09.2016
(51) Int. Cl.: B60T 13/74, F16H 19/04

(54) **ELEKTROMECHANISCHER BREMSKRAFTVERSTÄRKER**
ELECTROMECHANICAL BRAKE BOOSTER
SERVOFREIN ÉLECTROMÉCANIQUE

(30) Priorität: 17.09.2015 DE 102015012124
(43) Veröffentlichungstag der Anmeldung: 25.07.2018
(73) Patentinhaber: Lucas Automotive GmbH, 56070 Koblenz (DE)
(72) Erfinder: WINGENDER, Kurt, 56244 Hartenfels (DE); HOFMANN, Martin, 56743 Mendig (DE); KOETH, Boris, 56191 Weitersburg (DE); CALVO MARTINEZ, Jose Manuel, 56642 Kruft (DE); SPARFELD, Jens, 56357 Miehlen (DE)
(74) Vertreter: Röthinger, Rainer
(86) Internationale Anmeldenummer: PCT/EP2016/072056
(87) Internationale Veröffentlichungsnummer: WO 2017/046383

(56) Entgegenhaltungen:
- EP-A1- 2 292 483
- WO-A1-2006/079759
- WO-A1-2011/036343
- WO-A1-2014/177691
- DE-A1- 10 009 390
- US-A1- 2014 208 894

## Beschreibung

### Technisches Gebiet

Die vorliegende Offenbarung betrifft allgemein das technische Gebiet von elektrohydraulischen Bremskrafterzeugungsvorrichtungen. Sie betrifft insbesondere einen elektromechanischen Bremskraftverstärker, der in einer elektrohydraulischen Bremskrafterzeugungsvorrichtung eingesetzt werden kann.

### Stand der Technik

Elektromechanische Bremskraftverstärker werden von Elektromotoren angetrieben. Um eine Verstärkung der Bremskraft mit dem Bremskraftverstärker erzeugen zu können, muss die Rotationsbewegung der Ausgangswelle des Elektromotors in eine translatorische Bewegung umgewandelt werden. Hierfür sind aus dem Stand der Technik verschiedene Vorrichtungen bekannt.

WO 2014/177691 offenbart ein Bremssystem mit einem Hauptbremszylinder und einer Servobremse. Die Servobremse weist einen Elektromotor auf, dessen Abtriebswelle eine Schraube trägt. Die Schraube treibt zwei Schraubenräder an. Die Schraubenräder sind jeweils über eine Welle mit einem Stirnrad verbunden. Die Stirnräder treiben jeweils eine Zahnstange an, um eine Schubstange zur Betätigung des Hauptzylinders verlagern zu können.

In dem Dokument WO 2011/003643 A1 wird eine Kraftübertragungsanordnung offenbart. Die Kraftübertragungsanordnung weist einen Elektromotor auf, der eine Schneckenwelle antreibt. Auf der Schneckenwelle ist eine Schneckenverzahnung ausgebildet. Die Kraftübertragungsanordnung umfasst ferner ein erstes Schneckenrad, ein zweites Schneckenrad, ein erstes Ritzel und ein zweites Ritzel. Eine Zahnstange weist eine erste Zahnreihe und eine zweite Zahnreihe auf. Die Längsachse der Zahnstange verläuft parallel zur Achse der Schneckenwelle. Das erste Ritzel kämmt mit der ersten Zahnreihe und das zweite Ritzel kämmt mit der zweiten Zahnreihe. Das erste Ritzel ist mit dem ersten Schneckenrad verbunden, sodass sich das erste Schneckenrad und das erste Ritzel gemeinsam drehen. In gleicher Weise ist das zweite Schneckenrad mit dem zweiten Ritzel verbunden. Das erste Schneckenrad und das zweite Schneckenrad werden von der Schneckenverzahnung an der Schneckenwelle gemeinsam angetrieben.

Aus dem Stand der Technik ist ferner ein elektromechanischer Bremskraftverstärker bekannt, der in dem Dokument EP 2 420 421 A1 offenbart ist. Der elektromechanische Bremskraftverstärker weist einen Elektromotor, eine Schubstange und eine Antriebseinrichtung zum Antreiben der Schubstange auf. Eine Antriebswelle des Elektromotors treibt ein erstes Zahnrad mit einer Außenverzahnung und ein zweites Zahnrad mit einer Innenverzahnung an. Das erste Zahnrad treibt ein erstes Getrieberad und das zweite Zahnrad ein zweites Getrieberad an. Das erste Getrieberad und das zweite
Getrieberad greifen zum translatorischen Antreiben der Schubstange in eine Verzahnung an der Schubstange ein.

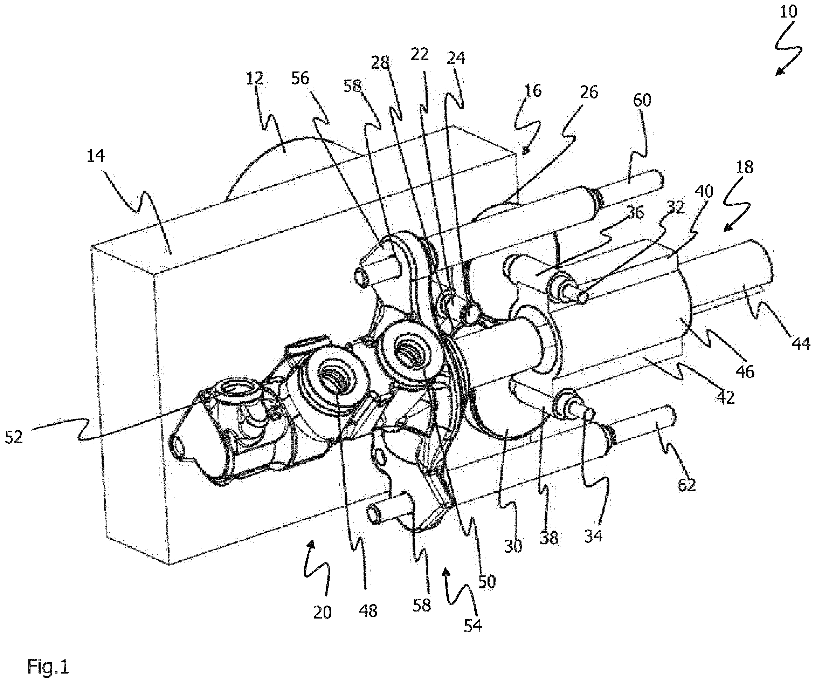

Weiterhin ist aus dem Dokument US 2014/0208894 A1 ein Drehmomentübertragungsantrieb mit einer Gewindestange und zwei in diese Gewindestange eingreifenden Zahnräder bekannt. Die Fig. 1Q und 1P des Dokuments offenbaren ein zweites Ausführungsbeispiel, bei dem ein Ritzel zwischen den beiden Zahnrädern angeordnet ist, welches entgegen der Drehrichtung der beiden Zahnräder rotiert.

Aufgrund ihrer Konstruktion bzw. ihres Aufbaus bauen die aus dem Stand der Technik bekannten Vorrichtungen relativ groß. Dies liegt unter anderem in dem komplexen Aufbau der in den genannten Dokumenten beschriebenen Getriebeanordnungen zum Umwandeln einer Rotation in eine translatorische Bewegung begründet.

### Kurzer Abriss

Es ist ein elektromechanischer Bremskraftverstärker mit einem kompakten Aufbau und damit verringertem Bauraumbedarf anzugeben.

Der elektromechanische Bremskraftverstärker für eine Fahrzeugbremsanlage umfasst eine Antriebsanordnung zum Antreiben wenigstens einer zum Betätigen eines Bremszylinders ausgebildeten Betätigungseinrichtung. Die Antriebsanordnung weist wenigstens einen Elektromotor und ein Getriebe zum Koppeln des Elektromotors mit der wenigstens einen Betätigungseinrichtung auf. Das Getriebe umfasst wenigstens ein erstes Stirnrad und wenigstens ein zweites Stirnrad, wobei der Elektromotor das erste Stirnrad direkt und das zweite Stirnrad über wenigstens ein Zwischenrad antreibt. Die Drehachsen des ersten Stirnrads, des zweiten Stirnrads, des Zwischenrads und des Elektromotors verlaufen parallel. An einer Ausgangswelle des Elektromotors ist wenigstens ein Ritzel vorgesehen, welches das erste Stirnrad und das Zwischenrad antreibt.

Unter einem Stirnrad ist ein Zahnrad mit einer Verzahnung an seinem Außenumfang zu verstehen. Durch die Verwendung von Stirnrädern kann gerade in Richtung der Drehachse des Elektromotors ein kompaktes und bauraumsparendes Getriebe bereitgestellt werden. Der kompakte Aufbau des Getriebes führt zu einer Antriebsanordnung eines elektromechanischen Bremskraftverstärkers, die in einem Fahrzeug wenig Bauraum einnimmt.

Das Zwischenrad kann ebenfalls in Form eines Stirnrades ausgebildet sein, d.h. das Zwischenrad kann eine Außenverzahnung aufweisen. Mit dem Zwischenrad wird erreicht, dass sich die Drehrichtung des zweiten Stirnrades verglichen mit der Drehrichtung des ersten Stirnrades umkehrt. Das erste Stirnrad und das zweite Stirnrad drehen sich somit gegensinnig. Das Getriebe ist dabei dazu eingerichtet, dass die Rotationsbewegung der Ausgangswelle des Elektromotors in eine translatorische Bewegung der Betätigungseinrichtung umgewandelt wird. Dies wird unter anderem durch die mit entgegengesetzten Drehrichtungen angetriebenen Stirnräder erreicht. Durch die translatorische Bewegung der Betätigungseinrichtung kann der Bremszylinder zur Erzeugung einer Bremskraft betätigt werden.
Um einen möglichst bauraumsparenden Aufbau des Getriebes in Richtung der Drehachse des Elektromotors zu erreichen, können das erste Stirnrad, das Zwischenrad, und das zweite Stirnrad in Richtung der Drehachse des Elektromotors in einer Ebene angeordnet sein.

Die wenigstens eine Betätigungseinrichtung kann wenigstens einen Zahnstangenabschnitt aufweisen. Der wenigstens eine Zahnstangenabschnitt kann an dem zweiten Betätigungselement vorgesehen sein, da primär das zweite Betätigungselement von dem Getriebe angetrieben werden soll. An der wenigstens einen Betätigungseinrichtung können ein erster Zahnstangenabschnitt und ein zweiter Zahnstangenabschnitt vorgesehen sein, die mit dem Getriebe koppelbar sind.

Eines der Stirnräder kann mit dem wenigstens einen Zahnstangenabschnitt gekoppelt sein. Dabei kann der erste Zahnstangenabschnitt mit dem ersten Stirnrad und der zweite Zahnstangenabschnitt mit dem zweiten Stirnrad gekoppelt sein. Jedes Stirnrad kann über eine Welle und ein daran angeordnetes Zahnrad mit einem der Zahnstangenabschnitte gekoppelt sein. Die beiden Zahnstangenabschnitte können an entgegengesetzten Seiten der Betätigungseinrichtung vorgesehen sein.

Je nach im Fahrzeug vorhandenem Bauraum können die Einheiten der Antriebsanordnung wie Getriebe und Elektromotor an verschiedenen Seiten der Betätigungseinrichtung angeordnet sein. Beispielsweise kann der Elektromotor an einer Seite der Betätigungseinrichtung und das Getriebe auf der der Seite mit dem Elektromotor abgewandten Seite der Betätigungseinrichtung angeordnet sein. Je nach Anordnung des Motors und des Getriebes kann das Getriebe aus Stirnrädern und einem Zwischenrad aufgebaut sein, die nicht in einer Ebene liegen. Dementsprechend können das erste Stirnrad und das Zwischenrad in Richtung der Drehachse des Elektromotors zueinander versetzt angeordnet sein. Das zweite Stirnrad und das Zwischenrad können dennoch in einer Ebene in Richtung der Drehachse des Elektromotors liegen.

Das Ritzel an der Ausgangswelle des Elektromotors kann in Richtung der Drehachse des Elektromotors in einer Ebene mit dem ersten Stirnrad und dem Zwischenrad liegen. Auf diese Weise kann ein besonders bauraumsparender Aufbau erreicht werden, da die Getriebeausgangswelle des Elektromotors relativ kurz ausgebildet sein kann. Das Ritzel an der Ausgangswelle des Elektromotors kann in Richtung der Drehachse des Elektromotors im wesentlichen dieselbe Erstreckung wie das erste Stirnrad und das Zwischenrad aufweisen.
Sollten das erste Stirnrad und das Zwischenrad in Richtung der Drehachse des Elektromotors versetzt zueinander angeordnet sein, muss die Motorausgangswelle entsprechend dimensioniert werden. Die Motorausgangswelle kann mit einem entsprechenden Ritzel versehen werden. Das Ritzel kann zum Antreiben des ersten Stirnrads und des in Richtung der Drehachse des Elektromotors versetzt zu dem ersten Stirnrad angeordneten Zwischenrads ausgebildet sein. Die Erstreckung des wenigstens einen Ritzels bzw. die Erstreckung der Verzahnung an dem Ritzel kann in Richtung der Drehachse des Elektromotors zumindest die axiale Erstreckung der Außenumfangsflächen des ersten Stirnrads und des Zwischenrads überspannen.

Zumindest das erste Stirnrad, das zweite Stirnrad und das Zwischenrad können eine Schrägverzahnung aufweisen. Ferner können auch das Ritzel oder das Ritzel an der Motorausgangswelle eine Schrägverzahnung aufweisen. Aufgrund der Schrägverzahnung werden nur relativ wenige Zähne zur Drehmomentübertragung zwischen den einzelnen Zahnrädern benötigt. Dies gilt insbesondere für das von dem Motor angetriebene Ritzel. Mit einem derartigen Ritzel bzw. Zahnrad mit einer niedrigen Anzahl von Zähnen kann ein relativ hohes Untersetzungsverhältnis erreicht werden. Ferner können die Zahnräder mit einer Schrägverzahnung aufgrund der geringen Anzahl an Zähnen relativ klein ausgeführt werden, was zu einem kompakten Aufbau des Getriebes führt. Kleinere Zahnräder lassen ferner einen geringen Abstand zwischen den Achsen der einzelnen Zahnräder
zu, was ebenfalls zu einem kompakten Aufbau des Getriebes führt. Schrägverzahnungen mit einem relativ großen Schrägungswinkel werden auch als Evoloid-Verzahnung bezeichnet.

Das erste Stirnrad und das zweite Stirnrad können jeweils mit einer mit einem Zahnrad versehenen Welle verbunden sein. Die Zahnräder an den von dem ersten Stirnrad und dem zweiten Stirnrad angetriebenen Wellen können jeweils in wenigstens einen Zahnstangenabschnitt eingreifen. Der wenigstens eine Zahnstangenabschnitt kann an der wenigstens einen Betätigungseinrichtung vorgesehen sein. Über den Zahnstangenabschnitt wird die Rotationsbewegung der Stirnräder und der mit den Stirnrädern über Wellen verbundenen Zahnrädern in eine translatorische Bewegung umgewandelt, die die Betätigungseinrichtung in Richtung des Bremszylinders oder von dem Bremszylinder weg verlagern kann. An der wenigstens einen Betätigungseinrichtung können ein erster Zahnstangenabschnitt und ein zweiter Zahnstangenabschnitt vorgesehen sein. Der erste Zahnstangenabschnitt kann mit dem ersten Stirnrad und der zweite Zahnstangenabschnitt kann mit dem zweiten Stirnrad zusammenwirken.

Die Antriebsanordnung kann eine Steuereinheit aufweisen, die zum Ansteuern des wenigstens einen Elektromotors ausgebildet ist. Die wenigstens eine Steuereinheit kann eine Sensoranordnung aufweisen oder mit einer Sensoranordnung verbunden sein. Die Sensoranordnung kann beispielsweise dazu eingerichtet sein, die notwendige Verstärkung der auf das Bremspedal ausgeübten Bremskraft bestimmbar zu machen. Anhand der Messwerte der Sensoranordnung kann dann ermittelt werden, welche Verstärkungskraft insbesondere von dem Elektromotor über das Getriebe bereitgestellt werden muss. Die von der Sensoranordnung erfassten Messwerte liefern somit einen Indikator dafür, welche Verstärkungskraft von dem Elektromotor zusammen mit dem Getriebe erzeugt und auf die wenigstens eine Betätigungseinrichtung übertragen werden muss. Einzelne Sensoren der Sensoranordnung können in den Elektromotor und/oder die Steuereinheit integriert werden. Die von dem elektromechanischen Bremskraftverstärker bereitzustellende Verstärkungskraft kann von einem von der Sensoranordnung erfassten Bremswunsch des Fahrers oder von Befehlen eines Fahrdynamikregelprogramms abhängen. Der Bremswunsch kann durch die wenigstens eine Sensoranordnung erfasst werden und von der wenigstens einen Steuereinheit in entsprechende Antriebssignale für den Elektromotor umgewandelt werden. Der Bremswunsch kann beispielsweise durch Erfassen eines Bremspedalwegs und/oder einer auf das Bremspedal einwirkenden Pedalbetätigungskraft bestimmt werden. Ein oder mehrere Fahrdynamikregelungsprogramme, wie beispielsweise ein Antiblockiersystem (ABS), eine Antriebsschlupfregelung (ASR), ein elektronisches Stabilitätsprogramm (ESP) können in der Steuereinheit hinterlegt sein.

Die Antriebsanordnung kann in in einem Fahrzeug montierten Zustand derart angeordnet sein, dass die Drehachse des Elektromotors senkrecht zur Längsachse der Betätigungseinrichtung und mit einem vorbestimmten Winkel zur Hochachse des Fahrzeugs verläuft. Der Elektromotor kann möglichst nah an der von ihm angetriebenen Betätigungseinrichtung angeordnet werden, wodurch ein kompakter und bauraumsparender Aufbau des elektromechanischen Bremskraftverstärkers erreicht wird. Die Positionierung der Antriebsanordnung des elektromechanischen Bremskraftverstärkers mit einem vorbestimmten Winkel zur Hochachse des Fahrzeugs ermöglicht eine verbesserte Ausnutzung des im Fahrzeug vorhandenen Bauraums, der von den in einem Fahrzeug vorhandenen oder vorgegebenen Befestigungsstellen bestimmt wird. Die Antriebsanordnung kann dabei derart ausgerichtet und angeordnet werden, dass der in einem Fahrzeug bezüglich der vorgegebenen Befestigungsstellen vorhandene Bauraum bestmöglich ausgenutzt werden kann. Die Drehachse des Elektromotors kann sich in jedem denkbaren Winkel zur Hochachse des Fahrzeugs erstrecken. Die Drehachse des Elektromotors kann sich beispielsweise auch mit einem Winkel von 0° zur Hochachse des Fahrzeugs erstrecken und damit parallel zur Hochachse verlaufen. Die Drehachse des Elektromotors kann auch mit einem Winkel von 45 Grad bzw. 135 Grad zu der Hochachse des Fahrzeugs verlaufen, um weitere Beispiele zu nennen.

Die Betätigungseinrichtung kann wenigstens ein erstes Betätigungselement umfassen, das mit einer auf ein Bremspedal ausgeübten Pedalbetätigungskraft beaufschlagbar ist. Neben dem ersten Betätigungselement kann die Betätigungseinrichtung wenigstens ein zweites Betätigungselement aufweisen, das von dem Elektromotor über das Getriebe angetrieben wird. Das wenigstens eine erste Betätigungselement kann zumindest abschnittsweise in dem zweiten Betätigungselement aufgenommen sein. Das erste Betätigungselement und das zweite Betätigungselement können zur Übertragung einer Bremskraft auf den Bremszylinder zusammenwirken. In diesem Fall kann es vorgesehen sein, dass zumindest ein Teil der von dem Bremspedal auf das erste Betätigungselement ausgeübten Bremskraft direkt auf den Bremszylinder übertragen wird. Basierend auf der erfassten, vom Fahrer über das Bremspedal angeforderten Bremskraft kann der Elektromotor von der Steuereinheit angesteuert werden. Der Elektromotor kann über das Getriebe das zweite Betätigungselement zur Erzeugung einer Verstärkungskraft in Richtung des Bremszylinders verlagern. Das erste Betätigungselement und das zweite Betätigungselement werden in Richtung des Bremszylinders verlagern, um über den Bremszylinder einen Bremsdruck an den Radbremsen zu erzeugen.

In einem Fahrzeug sind Befestigungsstellen zur Anbringung eines Bremskraftverstärkers zusammen mit einem Bremszylinder vorgesehen. Diese Befestigungsstellen werden zumeist von den Fahrzeugherstellern vorgegeben. Der elektromechanische Bremskraftverstärker kann wenigstens eine Befestigungseinrichtung aufweisen, die an den im Fahrzeug vorgesehenen Befestigungsstellen angebracht werden kann. Die Befestigungseinrichtung kann beispielswiese einen Flansch mit Öffnungen und Befestigungsbolzen aufweisen, die in den Öffnungen des Flansches aufgenommen werden. Über die Befestigungsbolzen kann der Bremskraftverstärker zusammen mit einem Bremszylinder am Fahrzeug angebracht werden. Der Bremszylinder und der elektromechanische Bremskraftverstärker können eine Baugruppe bilden. Die Befestigungseinrichtung definiert eine Befestigungsebene. Die Drehachse des Elektromotors kann mit einem Winkel von 60 bis 120° zur Befestigungsebene verlaufen.

Ein weiterer Aspekt ist eine elektrohydraulische Kraftfahrzeugbremsanlage mit einem elektromechanischen Bremskraftverstärker der voranstehend beschriebenen Art.

### Kurze Beschreibung der Figuren

Weitere Vorteile, Einzelheiten und Merkmale der hier beschriebenen Lösung ergeben sich aus der nachfolgenden Beschreibung von Ausführungsbeispielen sowie aus den Figuren. Es zeigen:
- Fig. 1: eine perspektivische Ansicht eines elektromechanischen Bremskraftverstärkers gemäß eines Ausführungsbeispiels;
- Fign. 2-7: Ansichten verschiedener Ausführungsbeispiele des elektromechanischen Bremskraftverstärkers mit sich unterscheidender Anordnung von Getriebe, Elektromotor und Steuereinheit;
- Fign. 8-11: Ansichten eines elektromechanischen Bremskraftverstärkers mit einem Getriebe gemäß einer ersten Ausführungsvariante; und
- Fign. 12-16: Ansichten eines elektromechanischen Bremskraftverstärkers mit einem Getriebe gemäß einer zweiten Ausführungsvariante.

### Detaillierte Beschreibung

Es ist darauf hinzuweisen, dass in den nachfolgend beschriebenen Figuren die Verzahnung der einzelnen Zahnräder, Zahnstangen, usw. nur schematisch dargestellt ist. Es versteht sich, dass in jedem Fall eine geeignete Verzahnung, die beispielsweise auch als Schrägverzahnung ausgebildet sein kann, vorhanden ist, um ein Kämmen der Getriebe-Elemente untereinander zu ermöglichen.

Fig. 1 zeigt eine perspektivische Ansicht eines elektromechanischen Bremskraftverstärkers, der allgemein mit 10 bezeichnet ist.

Der elektromechanische Bremskraftverstärker 10 umfasst einen Motor 12, eine Steuereinheit 14, ein Getriebe 16 und eine Betätigungseinrichtung 18. Die Betätigungseinrichtung 18 ist mit einem Bremszylinder 20 gekoppelt. Der elektromechanische Bremskraftverstärker 10 und der Bremszylinder 20 bilden eine Baugruppe.

An einer Ausgangswelle 22 des Elektromotors 12 ist ein Ritzel 24 vorgesehen. Das Ritzel 24 treibt ein erstes Stirnrad 26 und ein Zwischenrad 28 direkt bzw. unmittelbar an. Über das Zwischenrad 28 wird ein zweites Stirnrad 30 angetrieben. Die Stirnräder 26 und 30 treiben jeweils eine Welle 32, 34 an. An den Wellen 32 und 34 ist jeweils ein Zahnrad bzw. eine Zahnrolle 36, 38 vorgesehen. Die Zahnräder 36 und 38 stehen jeweils mit einem Zahnstangenabschnitt 40, 42 an der Betätigungseinrichtung 18 in Eingriff. Die Zahnstangenabschnitte 40, 42 sind an entgegengesetzten Seiten der Betätigungseinrichtung 18 angeordnet. Die jeweilige Zahnung dieser Getriebe-Elemente 24, 26, 28, 30, 36, 38, 40, 42 ist nur schematisch dargestellt.

Die Betätigungseinrichtung 18 weist ein erstes Betätigungselement 44 und ein zweites Betätigungselement 46 auf. An dem zweiten Betätigungselement 46 sind die Zahnstangenabschnitte 40, 42 vorgesehen, die mit den Zahnrädern 36, 38 in Eingriff stehen. Das erste Betätigungselement 44 kann mit einer von einem Fahrer des Fahrzeugs auf ein Bremspedal ausgeübten Bremskraft beaufschlagt werden. Dadurch wird das erste Betätigungselement 44 in Richtung des Bremszylinders 20 bewegt. Die vom Fahrer angeforderte Verstärkungskraft wird von der Betätigungseinrichtung 18 erzeugt, die von dem Elektromotor 12 über das Getriebe 16 angetrieben wird.

Dazu wird das zweite Betätigungselement 46 von dem Elektromotor 20 über das Getriebe 16 und insbesondere über die Zahnräder 36, 38 und die Zahnstangenabschnitte 40, 42 in Richtung des Bremszylinders 20 bewegt, um die vom Fahrer angeforderte Verstärkungskraft zusätzlich in den Bremszylinder 20 zu leiten. Durch die Bewegung der Betätigungseinrichtung 18 mit ihren Betätigungselementen 44, 46 in Richtung des Bremszylinders 20 wird in dem Bremszylinder 20 ein Hydraulikdruck erzeugt, der dem von dem Fahrer angeforderten Bremsdruck entspricht. Der Bremszylinder 20 weist zwei Öffnungen 48, 50 auf, über die die Bremskreise des Fahrzeugs mit Hydraulikfluid und damit mit Hydraulikdruck zur Erzeugung einer Bremskraft an den Radbremsen beaufschlagt werden können. An der weiteren Öffnung 52 des Bremszylinders 20 kann ein Behälter zur Aufnahme von Bremsflüssigkeit bzw. ein Druckausgleichbehälter angeordnet werden.

In einem Bereich zwischen dem Bremszylinder 20 und der Betätigungseinrichtung 18 ist eine Befestigungseinrichtung 54 vorgesehen, die einen Flansch 56 und Öffnungen 58 aufweist. Die Öffnungen 58 sind zur Aufnahme der Befestigungsbolzen 60, 62 ausgebildet. Die Befestigungsbolzen 60, 62 können in einer vorbestimmten Befestigungsposition an dem Fahrzeug beispielsweise an einer Spritzwand (nicht gezeigt) in Öffnungen eingesteckt und befestigt werden. Die Position der Befestigungsöffnungen 60, 62 wird zumeist von den Fahrzeugherstellern vorgegeben.

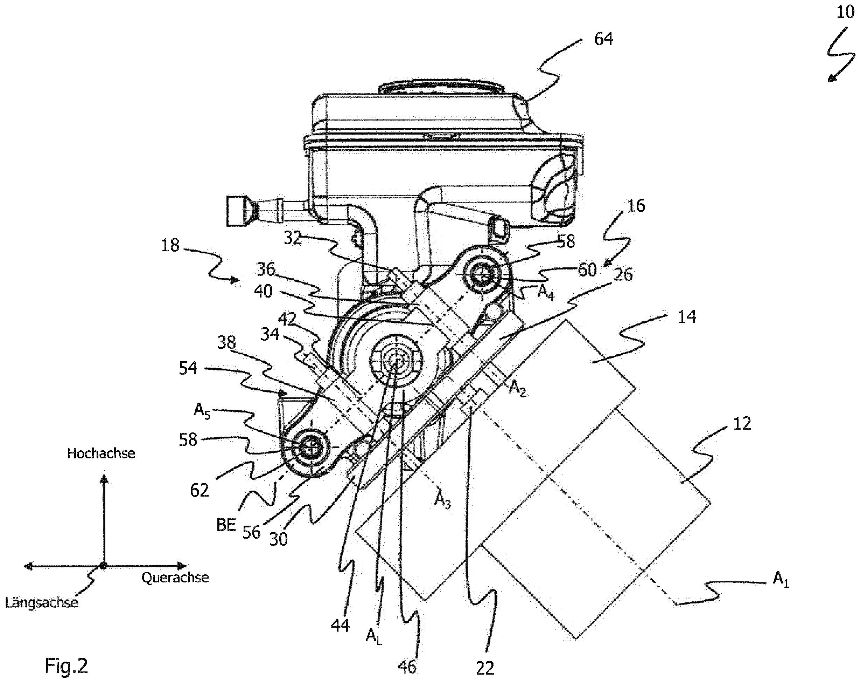

Fig. 2 zeigt eine Vorderansicht des in Figur 1 gezeigten elektromechanischen Bremskraftverstärkers 10.

In Figur 2 sind die Hochachse, die Längsachse und die Querachse des Fahrzeugs angegeben. Die Hochachse des Fahrzeugs ist eine Achse, die sich im Wesentlichen in vertikaler Richtung erstreckt. Die Längsachse A_{L} der Betätigungseinrichtung 18 verläuft parallel zur die Längsachse des Fahrzeugs.

Die Steuereinheit 14 ist zwischen dem Motor 12 und dem Getriebe 16 angeordnet. Der Elektromotor 12 treibt das Getriebe 16 an, über das die beiden Zahnräder 36 und 38 angetrieben werden, um über die Zahnstangenabschnitte 40, 42 die Betätigungseinrichtung 18 in Richtung der Längsachse A_{L} zu verlagern. Durch die Verlagerung der Betätigungseinrichtung 18 entlang der Längsachse A_{L} wird der Bremszylinder 20 betätigt, von dem in Fig. 2 nur ein Behälter 64 für die Bremsflüssigkeit erkennbar ist.

Die Antriebsanordnung aus Motor 12, Steuereinheit 14 und Getriebe 16 ist mit einem vorbestimmten Winkel relativ zur Hochachse des Fahrzeugs angeordnet. Der Winkel wird von der Drehachse A₁ des Elektromotors 12 vorgeben, die mit einem vorbestimmten Winkel zur Hochachse des Fahrzeugs verläuft. Dieser Winkel kann 45° betragen. Ebenso wie die Drehachse A₁ des Elektromotors 12 verlaufen die Drehachsen A₂ und A₃ der Stirnräder 26, 30, der Wellen 32, 34 und der Zahnräder 36 und 38 mit einem vorbestimmten Winkel schräg zur Hochachse des Fahrzeugs.

Der elektromechanische Bremskraftverstärker 10 weist eine Befestigungseinrichtung 54 auf. Die Befestigungseinrichtung 54 umfasst einen Flansch 56 mit Öffnungen 58 und Befestigungsbolzen 60, 62. Die Befestigungsbolzen 60, 62 sind fest mit der Baugruppe bzw. dem Flansch 56 am Bremszylinder 20 verbunden. Die Befestigungsbolzen 60, 62 spannen eine Befestigungsebene BE auf. Die Befestigungsebene BE erstreckt sich durch die Mittelachsen A₄ und A₅ der Befestigungsbolzen 60, 62. Die Befestigungsebene BE verläuft schräg bzw. mit einem vorbestimmten Winkel zur Fahrzeughochachse. Die Längsachse A_{L} der Betätigungseinrichtung 18 liegt in der Befestigungsebene BE. Die Drehachse A₁ des Elektromotors 12 verläuft senkrecht zur Längsachse A_{L} der Betätigungseinrichtung 18 und des Bremszylinders 20. Die Drehachse A₁ des Elektromotors 12 verläuft senkrecht zur Befestigungsebene BE. Gleiches gilt für die Drehachsen A₂ und A₃ der Stirnräder 26, 30 und der mit den Stirnrädern 26, 30 verbundenen Komponenten. Die Drehachse A₁ muss nicht senkrecht zur Befestigungsebene verlaufen, sondern kann sich auch mit einem Winkel von 60 bis 120° zur Befestigungsebene erstrecken.

Bei dem in Fig. 2 gezeigten Ausführungsbeispiel des elektromechanischen Bremskraftverstärkers 10 sind der Elektromotor 12, die Steuereinheit 14 und das Getriebe 16 zusammen an einer Seite der Betätigungseinrichtung 18 bzw. der Befestigungsebene BE angeordnet. Dadurch kann ein besonders kompakter Aufbau der Antriebsanordnung des Bremskraftverstärkers 10 erreicht werden.

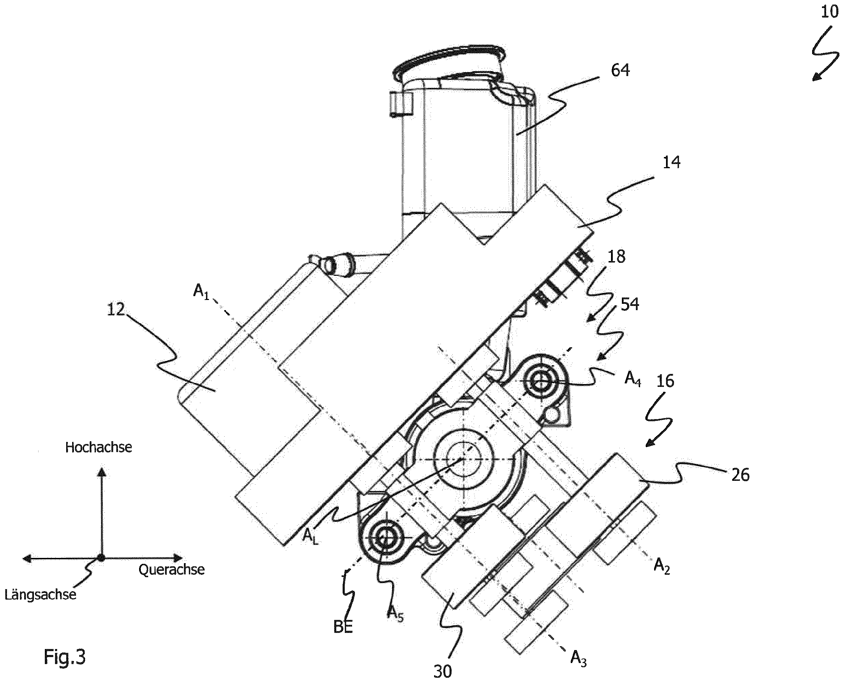

In den Figuren 3 bis 7 sind weitere Ausführungsbeispiele des elektromechanischen Bremskraftverstärkers 10 gezeigt, die sich im Wesentlichen durch die Anordnung des Motors 12, der Steuereinheit 14 und des Getriebes 16 unterscheiden. Unabhängig von der Anordnung der Antriebsanordnung mit dem Elektromotor 12, der Steuereinheit 14 und dem Getriebe 16 an der Betätigungseinrichtung 18, ist die Antriebsanordnung mit dem von der Drehachse A₁ des Elektromotors 12 vorgegebenen Winkel zur Hochachse des Fahrzeugs angeordnet. Die Drehachse A₁ des Elektromotors 12 verläuft zudem bei allen Ausführungsbeispielen senkrecht zur Befestigungsebene BE und auch senkrecht zur Längsachse A_{L} der Betätigungseinrichtung 18.

Fig. 3 zeigt eine Vorderansicht eines weiteren Ausführungsbeispiels des elektromechanischen Bremskraftverstärkers 10, bei dem der Elektromotor 12 und die Steuereinheit 14 zusammen auf einer Seite der Betätigungseinrichtung 18 und das Getriebe 16 auf der anderen Seite der Betätigungseinrichtung 18 angeordnet ist. Auch bei diesem Ausführungsbeispiel verläuft die Drehachse A₁ des Elektromotors 12 schräg zur Hochachse des Fahrzeugs und senkrecht zur Befestigungsebene BE. Die Drehachsen A₂ und A₃ der Stirnräder 26 und 30 verlaufen schräg bzw. mit einem vorbestimmten Winkel zur Hochachse des Fahrzeugs, aber ebenfalls senkrecht zur Befestigungsebene BE. Die Drehachse A₁ des Elektromotors verläuft senkrecht zur Längsachse A_{L} der Betätigungseinrichtung 18.

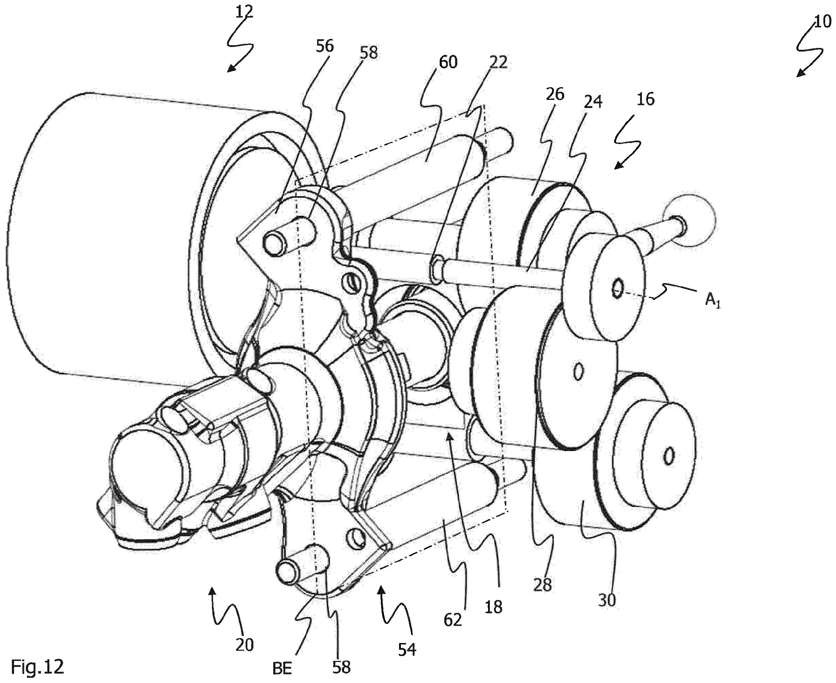

Das Getriebe 16 gemäß dieses Ausführungsbeispiels unterscheidet sich vom Aufbau her von dem voranstehend beschriebenen Getriebe 16. Auf diese Variante des Getriebes 16 wird im weiteren Verlauf dieser Beschreibung mit Bezug auf die Figuren 12 bis 16 im Detail eingegangen. Die Betätigungseinrichtung 18 entspricht der mit Bezug auf die Fign. 1 und 2 im Detail beschriebenen Betätigungsvorrichtung. Festzuhalten ist jedoch bereits hier, dass sich die Motorausgangswelle 22 von der Seite der Betätigungseinrichtung 18, an der der Motor 12 angeordnet ist, zur anderen Seite mit dem Getriebe 16 erstreckt, um ein von dem Motor 12 erzeugtes Drehmoment auf das Getriebe 16 übertragen zu können.

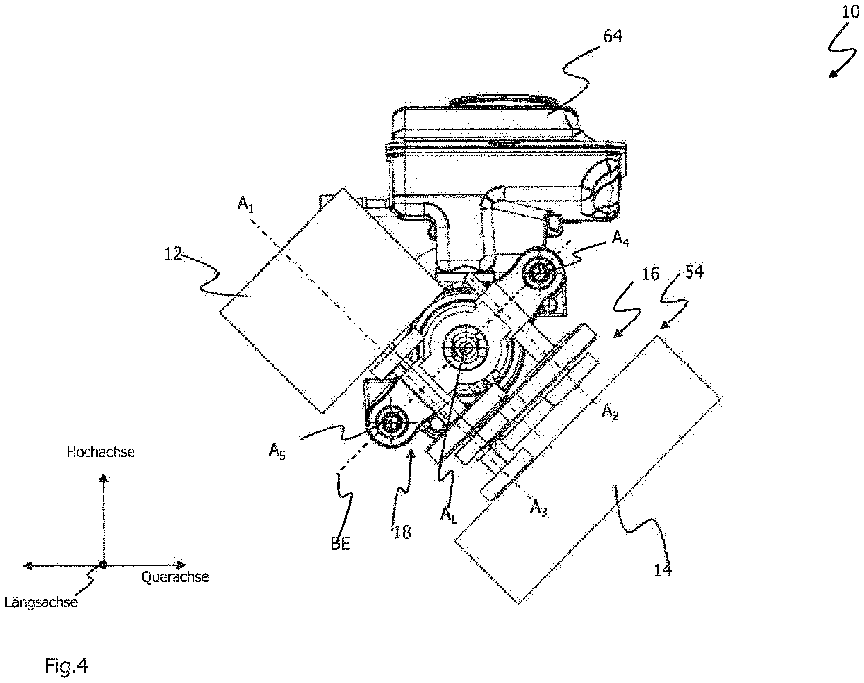

Fig. 4 zeigt eine Vorderansicht eines weiteren Ausführungsbeispiels des Bremskraftverstärkers 10.

Bei diesem Ausführungsbeispiel ist der Elektromotor 12 auf einer Seite der Betätigungseinrichtung 18 bzw. auf einer Seite der Befestigungsebene BE angeordnet. Das Getriebe 16 ist zusammen mit der Steuereinheit 14 auf der dem Motor 12 abgewandten Seite der Betätigungseinrichtung 18 und auf der jeweils anderen Seite der Befestigungsebene BE angeordnet. Die Drehachsen A₁, A₂ und A₃ verlaufen schräg bzw. mit einem vorbestimmten Winkel zur Hochachse des Fahrzeugs und senkrecht zur Befestigungsebene BE. Die Drehachse A₁ des Elektromotors verläuft senkrecht zur Längsachse A_{L} der Betätigungseinrichtung 18.

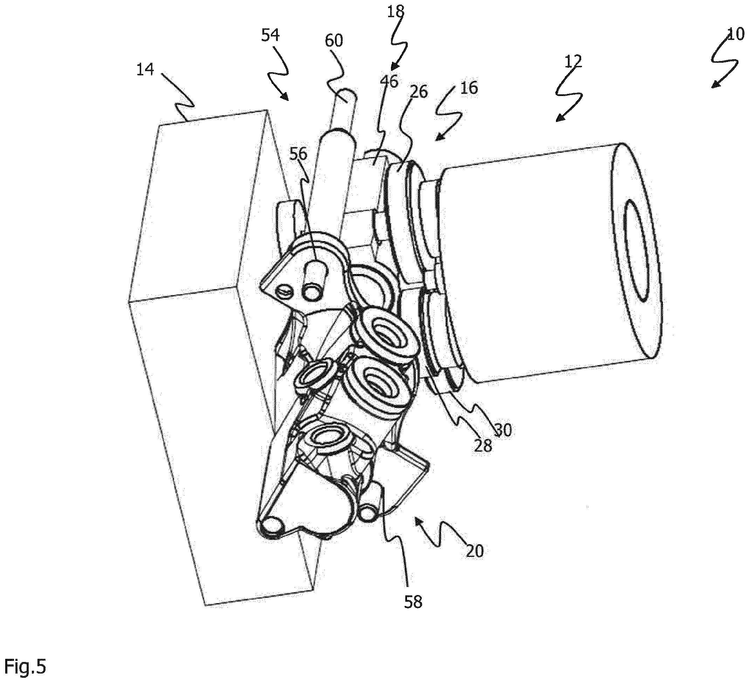

Fig. 5 zeigt eine perspektivische Ansicht eines weiteren Ausführungsbeispiels des Bremskraftverstärkers 10.

Bei diesem Ausführungsbeispiel des Bremskraftverstärkers 10 ist der Motor 12 zusammen mit dem Getriebe 16 auf einer Seite der Betätigungseinrichtung 18 bzw. des Bremszylinders 20 vorgesehen. Auch der dem Getriebe 16 abgewandten Seite der Betätigungseinrichtung 18 bzw. des Bremszylinders 20 ist die Steuereinheit 14 vorgesehen. Auch bei diesem Ausführungsbeispiel erstreckt sich die Motorausgangswelle 22 von der Seite mit dem Motor 12 Bis zur Seite mit dem Getriebe 16. Dabei durchdringt die Motorausgangswelle 22 die Befestigungsebene BE.

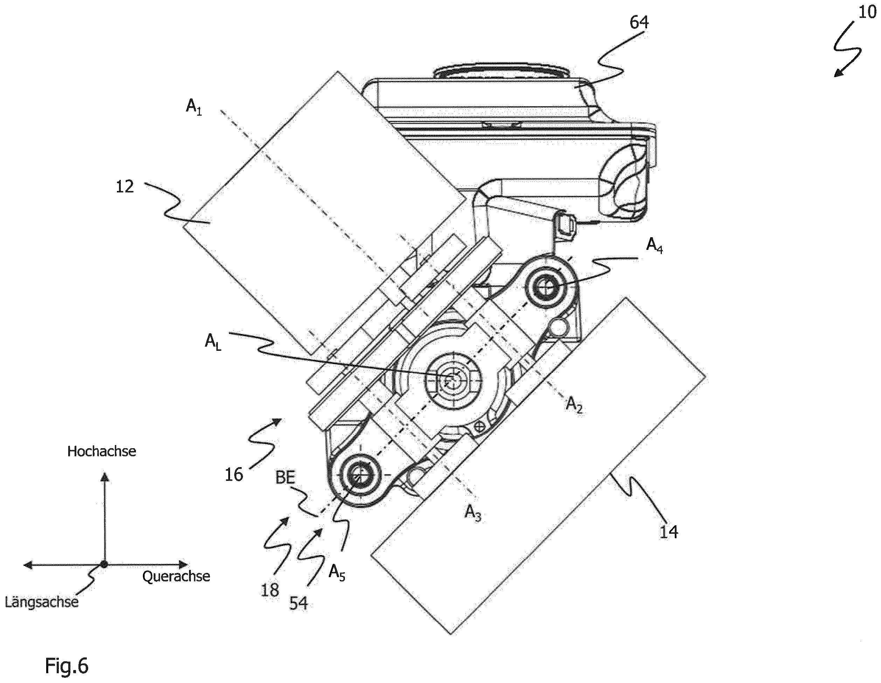

Fig. 6 zeigt eine Vorderansicht des elektromechanischen Bremskraftverstärkers 10 gemäß Fig. 5.

Der Elektromotor 12 und das Getriebe 16 sind auf einer Seite der Betätigungseinrichtung 18 bzw. der Befestigungsebene BE angeordnet. Die Steuereinheit 14 ist auf der jeweils anderen Seite der Betätigungseinrichtung 18 bzw. der Befestigungsebene BE angeordnet. Die Drehachsen A₁, A₂ und A₃ verlaufen schräg zur Hochachse des Fahrzeugs, aber senkrecht zur Befestigungsebene BE.

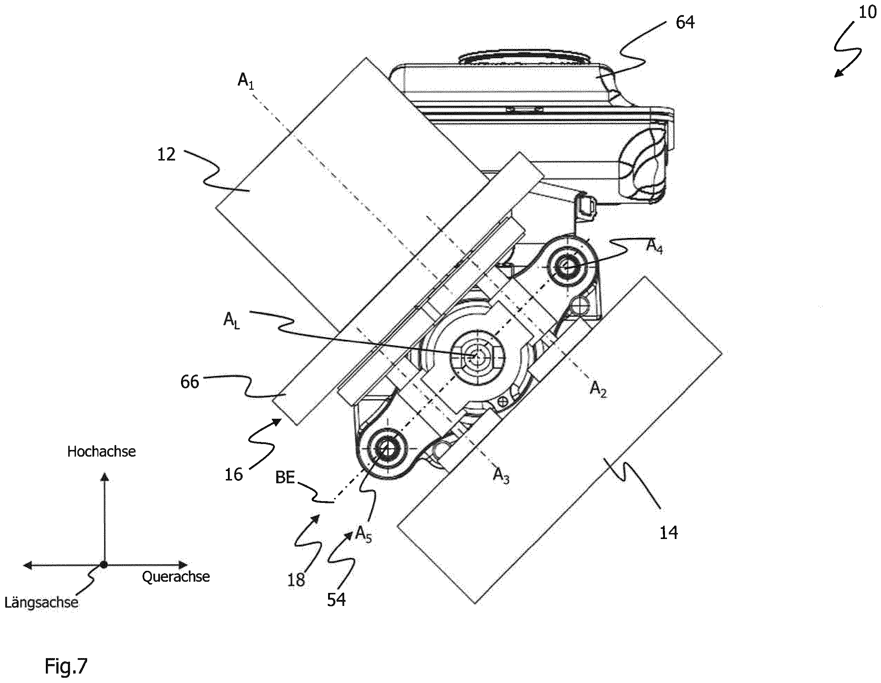

Die Ansicht gemäß Fig. 7 entspricht weitestgehend der Ansicht gemäß Fig. 6. Teile des Getriebes 16 und der Motorausgangswelle 22 werden durch ein Getriebegehäuse 66 zur Aufnahme von Lagerkräften der Drehachsen A₂, A₃, A₆ bzw. Drehwellen verdeckt.

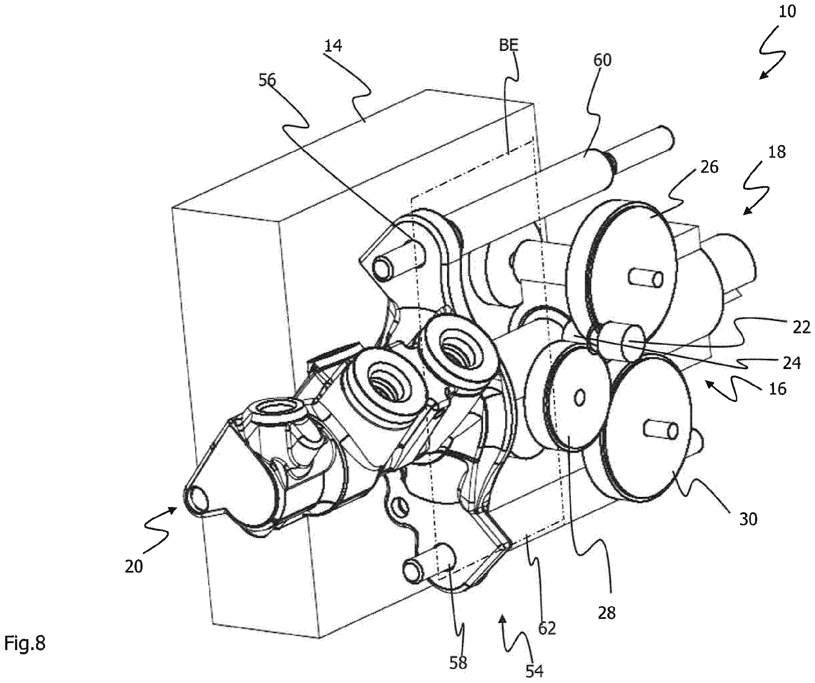

Fig. 8 zeigt eine perspektivische Ansicht des elektromechanischen Bremskraftverstärkers 10 mit einem Getriebe 16 gemäß einer ersten Ausführungsvariante.
Das Getriebe 16 weist ein erstes Stirnrad 26 und ein zweites Stirnrad 30 auf. Das erste Stirnrad 26 wird direkt von der Motorwelle 22 über ein in Fig. 8 nur schematisch erkennbares Ritzel 24 angetrieben, das an der Motorausgangswelle 22 angeordnet ist. Über das Ritzel 24 wird auch ein Zwischenzahnrad 28 direkt angetrieben. Das Zwischenzahnrad 28 wiederum treibt das zweite Stirnrad 30 an. Durch das Zwischenrad 28 wird erreicht, dass sich die Drehrichtung des zweiten Stirnrads 30 verglichen mit der Drehrichtung des ersten Stirnrads 26 umkehrt, sodass sich die Stirnräder 26 und 30 gegensinnig drehen. Die entgegengesetzten Drehrichtungen des ersten Stirnrades und des zweiten Stirnrades werden benötigt, um die Betätigungseinrichtung 18 mit beiden Stirnrädern 26 und 30 antreiben zu können.

Das erste Stirnrad 26, das Zwischenrad 28, das zweite Stirnrad 30 und das Ritzel 24 an der Motorausgangswelle 22 sind in Richtung der Drehachse A₁ des Elektromotors 12 in einer Ebene angeordnet.

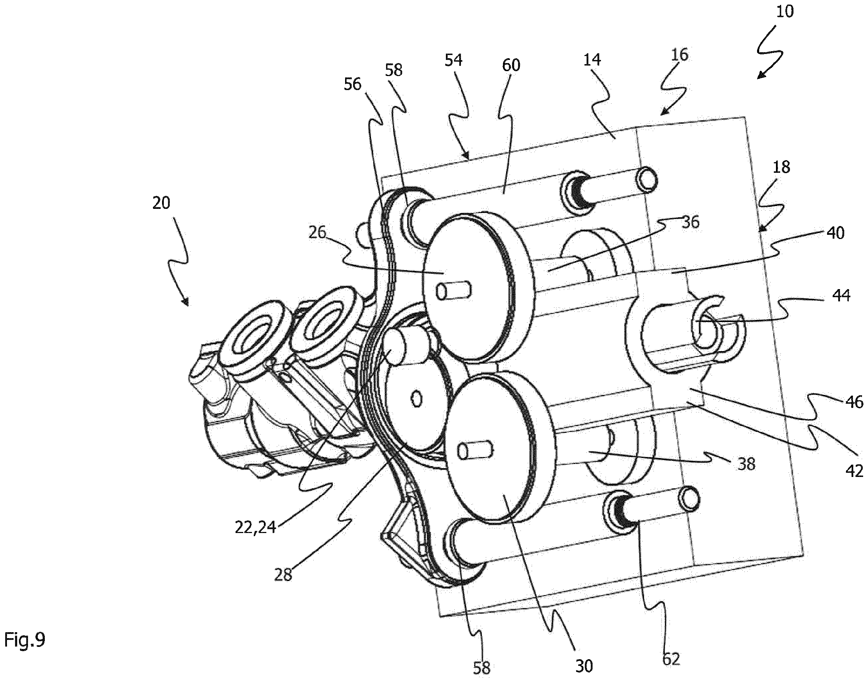

Fig. 9 zeigt eine weitere perspektivische Ansicht des in Fig. 8 gezeigten Bremskraftverstärkers 10.

Die Betätigungseinrichtung 18 setzt sich aus einem ersten Betätigungselement 44 und einem zweiten Betätigungselement 46 zusammen. Das zweite Betätigungselement 46 kann von dem Getriebe 16 angetrieben werden. Dazu weist das zweite Betätigungselement 46 die Zahnstangenabschnitte 40 und 42 auf, in die Zahnräder 36 und 38 eingreifen. Die Zahnräder 36 und 38 sind mit dem ersten Stirnrad 26 und dem zweiten Stirnrad 30 verbunden und werden von den Stirnrädern 26, 30 angetrieben. Das erste Stirnrad 26 wird unmittelbar von dem Ritzel 24 an der Motorausgangswelle 22 angetrieben. Das Ritzel 24 an der Motorausgangswelle 22 treibt das Zwischenrad 28 an, das wiederum das zweite Stirnrad 30 antreibt. Wird ein vom Fahrer auf ein Bremspedal (nicht gezeigt) ausgeübte Bremskraft auf das erste Betätigungselement 44 übertragen, wird das Betätigungselement 44 in Richtung des Bremszylinders 20 bewegt. Die Steuereinheit 14 steuert basierend auf der vom Fahrer auf das Bremspedal ausgeübten Bremskraft den Motor 12 an. Der Motor 12 treibt das Getriebe 16 an, um das zweite Betätigungselement 46 entlang der Längsachse A_{L} der Betätigungseinrichtung 18 in Richtung des Bremszylinders 20 zu verlagern. Durch die Verlagerung der Betätigungseinrichtung 18 in Richtung des Bremszylinders 20 wird eine Verstärkung der Bremskraft erreicht und über den Bremszylinder 20 eine Bremsdruck an den Radbremsen (nicht gezeigt) erzeugt.

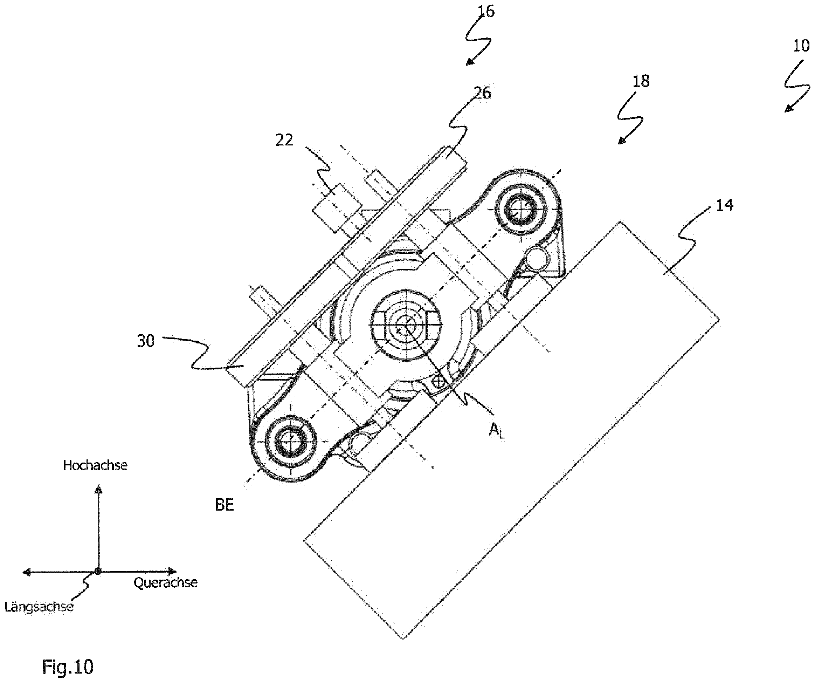

Fig. 10 zeigt eine Vorderansicht des in den Fign. 8 und 9 gezeigten Bremskraftverstärkers 10.

In Fig. 10 ist insbesondere erkennbar, dass sämtliche Zahnräder des Getriebes 16 in einer Flucht bzw. in einer Ebene liegen, d.h. die Stirnräder 26, 30, das Zwischenrad 28 und das Ritzel 24 sind nicht in Richtung der Drehachse A₁ des Motors zueinander versetzt.

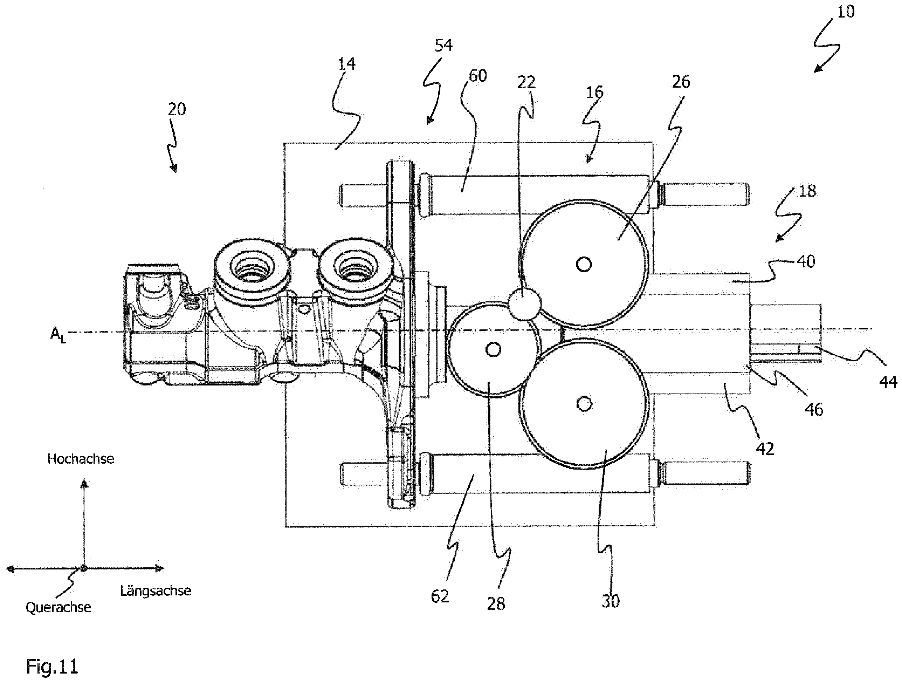

Fig. 11 zeigt eine Seitenansicht des in den Fign. 8 bis 10 gezeigten elektromechanischen Bremskraftverstärkers 10.

Der Zahnstangenabschnitt 40 ist in Fig.11 oberhalb der Längsachse A_{L} der Betätigungseinrichtung 18 an dem zweiten Betätigungselement 46 angeordnet. Der Zahnstangenabschnitt 42 ist unterhalb der Längsachse A_{L} an dem zweiten Betätigungselement 46 vorgesehen. Um die Betätigungseinrichtung 18 in Richtung des Bremszylinders 20 verlagern zu können, treibt die erste Stirnscheibe 26 den oberen Zahnstangenabschnitt 40 und die zweite Stirnscheibe 30 den unteren Zahnstangenabschnitt 42 an. Die Betätigungseinrichtung 18 ist mit dem Bremszylinder 20 verbunden, der sich in Richtung der Längsachse A_{L} an die Betätigungseinrichtung 18 anschließt.

In Figur 11 wird ferner deutlich, dass das erste Stirnrad 26 direkt von der Motorausgangswelle 22 angetrieben wird, wohingegen das Zwischenrad 28 zwischen dem Ritzel 24 und dem zweiten Stirnrad 30 angeordnet ist. Die Drehmomentübertragung erfolgt von dem Ritzel 24 über das Zwischenrad 28 auf das zweite Stirnrad 30.

Die Befestigungseinrichtung 54 ist zwischen dem Bremszylinder 20 und der Betätigungseinrichtung 18 vorgesehen. Die Befestigungseinrichtung 54 weist die Befestigungsbolzen 60, 62 auf, die sich in Richtung der Längsachse des Fahrzeugs erstrecken und die Befestigungsebene BE aufspannen.

Fig. 12 zeigt eine perspektivische Ansicht des elektromechanischen Bremskraftverstärkers 10 mit einem Getriebe 16 gemäß einer zweiten Ausführungsvariante.

In Fig. 12 ist erkennbar, dass das erste Stirnrad 26 und das zweite Stirnrad 30 in unterschiedlichen Ebenen liegen. Auch das Zwischenrad 28 und das erste Stirnrad 26 sind in Richtung der Motorausgangswelle 22 bzw. der Drehachse A₁ des Elektromotors 12 zueinander versetzt angeordnet sind.

An der Motorausgangswelle 22 ist ein Ritzel 24 vorgesehen, dass das erste Stirnrad 26 und das Zwischenrad 28 antreiben kann, obwohl das erste Stirnrad 26 und das Zwischenrad 28 in Richtung der Drehachse A₁ versetzt zueinander angeordnet sind. Das Ritzel 24 ist dementsprechend derart ausgebildet und dimensioniert, dass es die Erstreckung der Außenumfangsflächen des ersten Stirnrads 26 und des Zwischenrads 28 in Richtung der Drehachse A₁ des Elektromotors 12 überspannt und somit sowohl das erste Stirnrad 26 als auch das Zwischenrad 28 antreiben kann. Die Motorausgangswelle 22 erstreckt sich von dem Motor 12 zu dem Getriebe 16, das auf der anderen Seite der Betätigungseinrichtung 18 angeordnet ist. Die Motorausgangswelle 22 durchdringt dabei die Befestigungsebene BE.

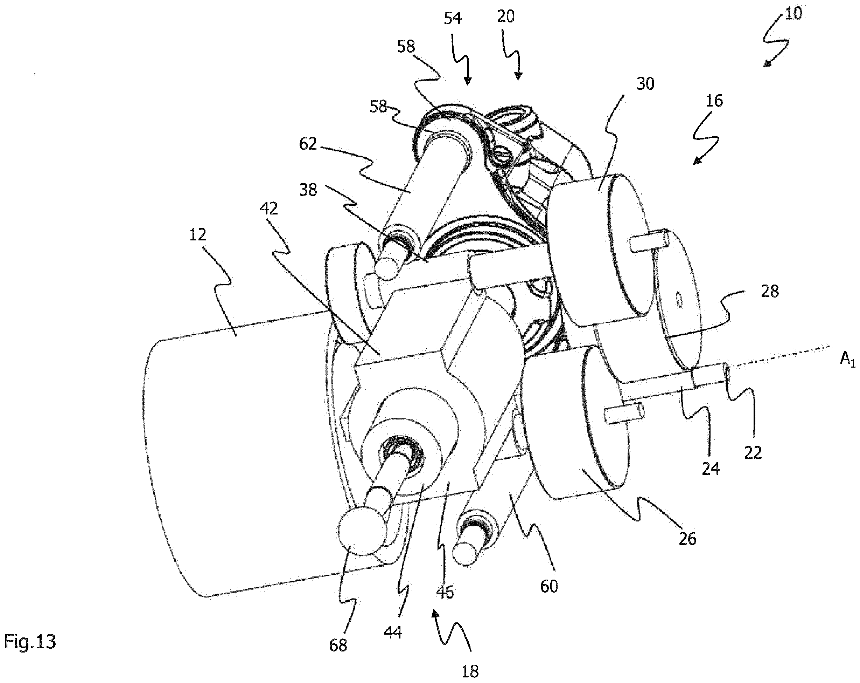

Fig. 13 zeigt eine weitere perspektivische Ansicht des in Fig. 12 gezeigten elektromechanischen Bremskraftverstärkers 10.

Die Betätigungseinrichtung 18 ist mit einem Kraftübertragungsglied 68 verbunden, dass eine auf ein Bremspedal ausgeübte Bremskraft auf die Betätigungseinrichtung 18 überträgt. Das Kraftübertragungsglied 68 ist mit dem ersten Betätigungselement 44 gekoppelt.

Die Motorausgangswelle 22 bzw. das Ritzel 24 an der Motorausgangswelle 22 treibt das erste Stirnrad 26 und das Zwischenrad 28 direkt und unmittelbar an. Das Zwischenrad 28 treibt das zweite Stirnrad 30 an. Über das Zwischenrad 28 kann die Drehrichtung des zweiten Stirnrads 30 umgekehrt werden, sodass sich das erste Stirnrad 26 und das zweite Stirnrad 30 gegensinnig drehen.

Das zweite Stirnrad 30 und das Zwischenrad 28 sind in Richtung der Drehachse A₁ in einer Ebene angeordnet. Das erste Stirnrad 26 ist in Richtung der Drehachse A₁ des Elektromotors 12 zu dem Zwischenrad 28 und dem zweiten Stirnrad 30 versetzt angeordnet. Anders ausgedrückt sind das Zwischenrad 28 und das zweite Stirnrad 30 in einer anderen Ebene angeordnet als das erste Stirnrad 26.

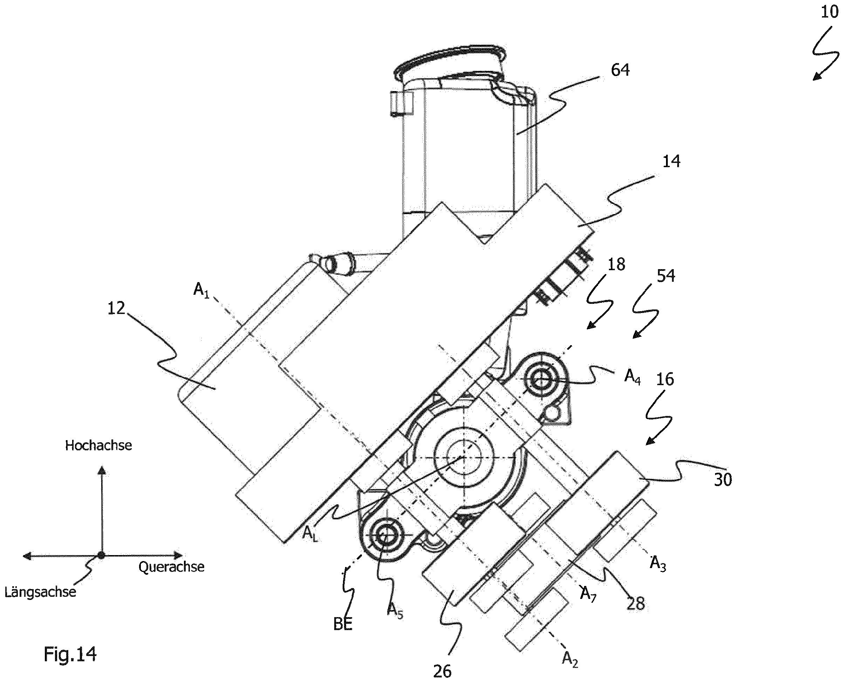

Fig. 14 zeigt eine Vorderansicht des in den Fign. 12 und 13 dargestellten elektromechanischen Bremskraftverstärkers 10.

Die Drehachse A₁ des Elektromotors 12 verläuft schräg mit einem vorbestimmten Winkel zur Hochachse des Fahrzeugs. Die Drehachse A₁ des Elektromotors 12 verläuft senkrecht zur Befestigungsebene BE. In Richtung der Drehachse A₁ des Elektromotors 12 ist das erste Stirnrad 26 versetzt zu dem zweiten Stirnrad 30 und dem Zwischenrad 28 angeordnet. Die Drehachsen A₂ des ersten Stirnrades 26, A₃ des zweiten Stirnrades 30 und A₆ des Zwischenrads 28 verlaufen parallel zueinander, aber senkrecht zur Befestigungsebene BE und schräg zur Hochachse des Fahrzeugs.

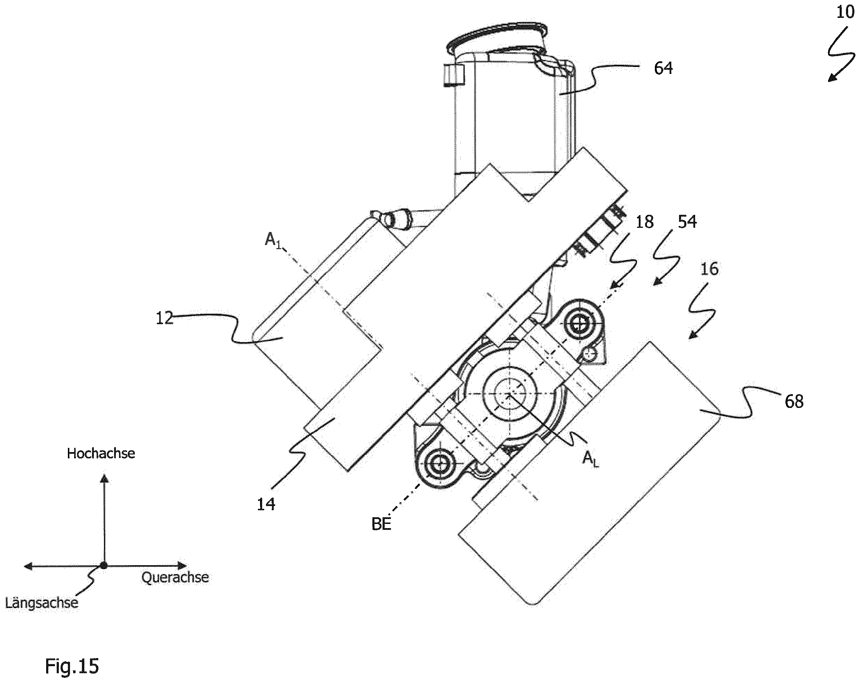

Fig. 15 zeigt eine Ansicht eines elektromechanischen Bremskraftverstärkers 10, die weitgehend der Darstellung gemäß Fig. 14 entspricht, jedoch mit dem Unterschied, dass das Getriebe 16 mit einem Getriebegehäuse 68 zur Aufnahme der Lagerkräfte der einzelnen Drehachsen A₂, A₃, A₆ ausgebildet ist.

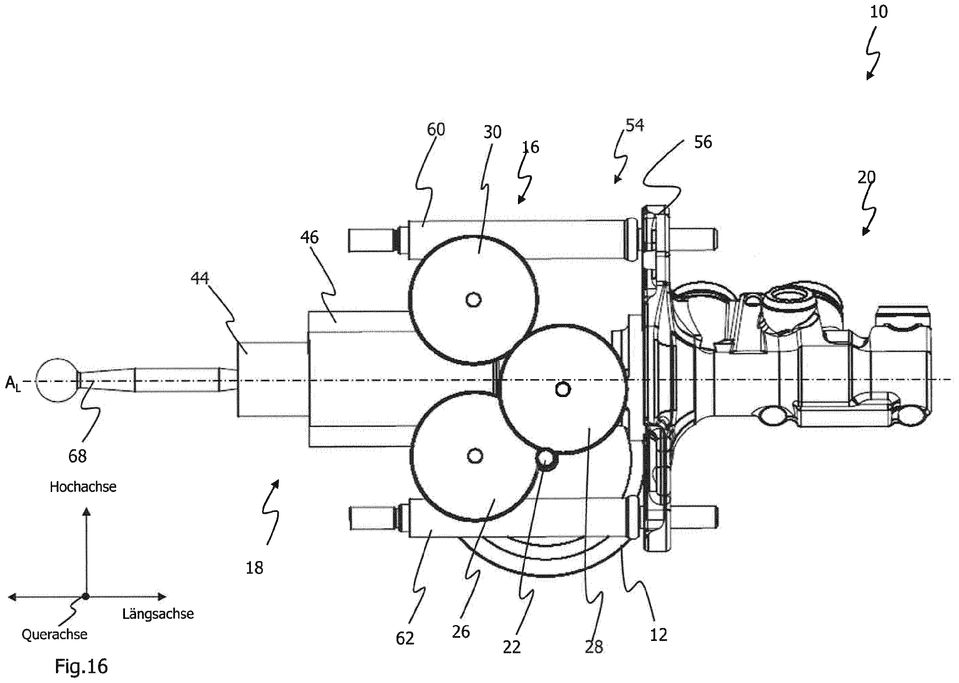

Fig. 16 zeigt eine Seitenansicht des elektromechanischen Bremskraftverstärkers 10.

In Fig. 16 wird ebenfalls deutlich, dass das zweite Stirnrad 30 und das Zwischenrad 28 in einer Ebene angeordnet sind. Das erste Stirnrad 26 ist zu dem zweiten Stirnrad 30 und dem Zwischenrad 28 versetzt angeordnet. In Richtung der Querachse des Fahrzeugs überlappt die Zwischenscheibe 28 das erste Stirnrad 26 teilweise. Die Motorausgangswelle 22 steht unterhalb des Überlappungsbereichs von ersten Stirnrad 26 und dem Zwischenrad 28 vor. Das erste Stirnrad 26 und das Zwischenrad 28 werden direkt von der Motorausgangswelle 22 angetrieben, auch wenn das erste Stirnrad 26 und das Zwischenrad 28 zueinander versetzt angeordnet sind.

## Patentansprüche

1. Elektromechanischer Bremskraftverstärker (10) für eine elektrohydraulische Fahrzeugbremsanlage, mit einer Antriebsanordnung zum Antreiben wenigstens einer zum Betätigen eines Bremszylinders (20) ausgebildeten Betätigungseinrichtung (18), wobei die Antriebsanordnung wenigstens einen Elektromotor (12) und ein Getriebe (16) zum Koppeln des Elektromotors (12) mit der wenigstens einen Betätigungseinrichtung (18)aufweist,
**dadurch gekennzeichnt, dass**
das Getriebe (16) wenigstens ein erstes Stirnrad (26) und wenigstens ein zweites Stirnrad (30) aufweist,
und dass der Elektromotor (12) das erste Stirnrad (26) direkt und das zweite Stirnrad (30) über wenigstens ein Zwischenrad (28) antreibt,
und dass die Drehachsen (A₁, A₂, A₃) des ersten Stirnrads (26), des zweiten Stirnrads (30), des Zwischenrads (28) und des Elektromotors (12) parallel verlaufen,
und dass an einer Ausgangswelle (22) des Elektromotors (12) wenigstens ein Ritzel (24) vorgesehen ist, das das erste Stirnrad (26) und das Zwischenrad (28) antreibt.

2. Elektromechanischer Bremskraftverstärker (10) nach Anspruch 1,
wobei die Betätigungseinrichtung (18) wenigstens einen Zahnstangenabschnitt (40, 42) aufweist, der mit dem Getriebe (16) koppelbar ist.

3. Elektromechanischer Bremskraftverstärker (10) nach Anspruch 2,
wobei die Betätigungseinrichtung (18) einen ersten (40) und einen zweiten Zahnstangenabschnitt (42) aufweist, die an entgegengesetzten Seiten der Betätigungseinrichtung (18) angeordnet sind.

4. Elektromechanischer Bremskraftverstärker (10) nach einem der Ansprüche 1 bis 3,
wobei das erste Stirnrad (26), das Zwischenrad (28) und das zweite Stirnrad (30) in axialer Richtung der Drehachse (A₁) des Elektromotors (12) in einer Ebene angeordnet sind.

5. Elektromechanischer Bremskraftverstärker (10) nach einem der Ansprüche 1 bis 3,
wobei das erste Stirnrad (26) und das Zwischenrad (28) in axialer Richtung der Drehachse (A₁) des Elektromotors (12) zueinander versetzt angeordnet sind.

6. Elektromechanischer Bremskraftverstärker (10) nach Anspruch 5,
wobei das zweite Stirnrad (30) und das Zwischenrad (28) in einer Ebene in axialer Richtung der Drehachse (A₁) des Elektromotors (12) liegen.

7. Elektromechanischer Bremskraftverstärker (10) nach Anspruch 4,
wobei das wenigstens eine Ritzel (24) in axialer Richtung der Drehachse (A₁) des Elektromotors (12) in einer Ebene mit dem ersten Stirnrad (26), dem zweiten Stirnrad (30) und dem Zwischenrad (28) liegt.

8. Elektromechanischer Bremskraftverstärker (10) nach Anspruch 5 oder 6,
wobei das wenigstens eine Ritzel (24) in axialer Richtung der Drehachse (A₁) des Elektromotors (12) versetzt zu dem ersten Stirnrad (26) angeordnet ist.

9. Elektromechanischer Bremskraftverstärker (10) nach Anspruch 8,
wobei die Erstreckung des wenigstens einen Ritzels (24) in axialer Richtung der Drehachse (A₁) des Elektromotors (12) zumindest die axiale Erstreckung der Außenumfangsflächen des ersten Stirnrads (26) und des Zwischenrads (28) überspannt.

10. Elektromechanischer Bremskraftverstärker (10) nach einem der Ansprüche 1 bis 9,
wobei zumindest das erste Stirnrad (26), das zweite Stirnrad (30) und das Zwischenrad (28) eine Schrägverzahnung aufweisen.

11. Elektromechanischer Bremskraftverstärkter (10) nach einem der Ansprüche 1 bis 10,
wobei das erste Stirnrad (26) und das zweite Stirnrad (28) jeweils mit einer Welle (32, 34) verbunden sind, die jeweils wenigstens ein Zahnrad (36, 38) aufweisen.

12. Elektromechanischer Bremskraftverstärker (10) nach einem der Ansprüche 1 bis 11,
wobei die Antriebsanordnung wenigstens eine Steuereinheit (14) aufweist, die zum Ansteuern des wenigstens einen Elektromotors (12) eingerichtet ist.

13. Elektromechanischer Bremskraftverstärker (10) nach einem der Ansprüche 1 bis 12,
wobei die Antriebsanordnung (14) im in einem Fahrzeug montierten Zustand derart anordenbar ist, dass die Drehachse (A₁) des Elektromotors (12) senkrecht zur Längsachse (A_{L}) der Betätigungseinrichtung (12) und mit einem vorbestimmten Winkel zur Hochachse des Fahrzeugs verläuft.

14. Elektromechanischer Bremskraftverstärker (10) nach einem der Ansprüche 1 bis 13,
wobei die Betätigungseinrichtung (18) wenigstens ein erstes Betätigungselement (44), das mit einer auf ein Bremspedal ausgeübten Pedalkraft beaufschlagbar ist, und wenigstens ein zweites Betätigungselement (46) aufweist, das von dem Elektromotor (12) über das Getriebe (16) angetrieben wird, und/oder
wobei der elektromechanische Bremskraftverstärker (10) über wenigstens eine Befestigungseinrichtung (54) an einem Fahrzeug anbringbar ist, wobei die wenigstens eine Befestigungseinrichtung (54) eine Befestigungsebene (BE) definiert, in der eine Längsachse (A_{L}) der wenigstens einen Betätigungseinrichtung (18) liegt.

15. Elektrohydraulische Kraftfahrzeugbremsanlage mit einem Bremszylinder (20) und einem elektromechanischen Bremskraftverstärker (10) nach einem der Ansprüche 1 bis 14, wobei der elektromechanische Bremskraftverstärker (10) eine Betätigung des Bremszylinders (20) bewirkt.

## Claims

1. An electromechanical brake booster (10) for an electrohydraulic motor vehicle braking system, with a drive assembly for driving at least one actuator (18) designed to actuate a brake cylinder (20), wherein the drive assembly has at least one electric motor (12) and a gear mechanism (16) for coupling the electric motor (12) to the at least one actuator (18),
**characterised in that**
the gear mechanism (16) has at least one first spur gear (26) and at least one second spur gear (30),
and that the electric motor (12) drives the first spur gear (26) directly and drives the second spur gear (30) via at least one intermediate gear (28),
and that the axis of rotation (A₁, A₂, A₃) of the first spur gear (26), of the second spur gear (30), of the intermediate gear (28) and of the electric motor (12) run parallel,
and that at least one pinion (24) is provided at an output shaft (22) of the electric motor (12), which drives the first spur gear (26) and the intermediate gear (28).

2. The electromechanical brake booster (10) as claimed in claim 1,
wherein the actuator (18) has at least one toothed rack section (40, 42) which can be coupled to the gear mechanism (16).

3. The electromechanical brake booster (10) as claimed in claim 2,
wherein the actuator (18) has a first (40) and a second toothed rack section (42) which are arranged on opposite sides of the actuator (18).

4. The electromechanical brake booster (10) as claimed in any of claims 1 to 3,
wherein the first spur gear (26), the intermediate gear (28) and the second spur gear (30) are arranged in the same plane in the direction of the axis of rotation (A₁) of the electric motor (12).

5. The electromechanical brake booster (10) as claimed in any of claims 1 to 3,
wherein the first spur gear (26) and the intermediate gear (28) are arranged offset with respect to each other in the direction of the axis of rotation (A₁) of the electric motor(12).

6. The electromechanical brake booster (10) as claimed in claim 5,
wherein the second spur (30) gear and the intermediate gear (28) are located in the same plane in the direction of the axis of rotation (A₁) of the electric motor (12).

7. The electromechanical brake booster (10) as claimed in claim 4,
wherein the at least one pinion (24) is located in the same plane as the first spur gear (26), the second spur gear (30) and the intermediate gear (28) in the direction of the axis of rotation (A₁) of the electric motor (12).

8. The electromechanical brake booster (10) as claimed in claim 5 or 6,
wherein the at least one pinion (24) is arranged offset with respect to the first spur gear (26) in the direction of the axis of rotation (A₁) of the electric motor (12).

9. The electromechanical brake booster (10) as claimed in claim 8,
wherein the extension of the at least one pinion (24) spans at least the axial extension of the outer peripheral surfaces of the first spur gear (26) and the intermediate gear (28) in the direction of the axis of rotation (A₁) of the electric motor (12).

10. The electromechanical brake booster (10) as claimed in any of claims 1 to 9,
wherein at least the first spur gear (26), the second spur gear (30) and the intermediate gear (28) have helical gearing.

11. The electromechanical brake booster (10) as claimed in any of claims 1 to 10,
wherein the first spur gear (26) and the second spur gear (30) are each connected to a shaft (30, 32), each of which has a gear wheel (36, 38).

12. The electromechanical brake booster (10) as claimed in any of claims 1 to 11,
wherein the drive assembly (14) includes at least one control unit which is configured to actuate the at least one electric motor (12).

13. The electromechanical brake booster (10) as claimed in any of claims 1 to 12,
wherein the drive assembly (14) when installed in a motor vehicle is arranged such that the axis of rotation (A₁) of the electric motor (12) extends perpendicularly to the longitudinal axis (A_{L}) of the actuator (12) and at a predetermined angle to the vertical axis of the vehicle.

14. The electromechanical brake booster (10) as claimed in any of claims 1 to 13,
wherein the actuator (18) comprises at least one first actuating element (44) which can be charged with a pedal force exerted on a brake pedal, and at least one second actuating element (46) which is driven by the electric motor (12) via the gear mechanism (16), and/or
wherein the electromechanical brake booster (10) can be installed on a motor vehicle by means of at least one fastening device (54), wherein the at least one fastening device (54) defines a mounting plane (BE) in which the longitudinal axis (A_{L}) of the at least one actuator (18) lies.

15. An electrohydraulic motor vehicle braking system with a brake cylinder (20) and an electromechanical brake booster (10) as claimed in any of claims 1 to 14,
wherein the electromechanical brake booster (10) causes an actuation of the brake cylinder (20).

## Revendications

1. Servofrein électromécanique (10) pour un système de freinage électrohydraulique de véhicule, comportant un dispositif d'entraînement pour entraîner au moins un dispositif d'actionnement (18) destiné à actionner un cylindre de frein (20), le dispositif d'entraînement comprenant au moins un moteur électrique (12) et une transmission (16) pour accoupler le moteur électrique (12) audit au moins un dispositif d'actionnement (18),
**caractérisé en ce que**
la transmission (16) comprend au moins une première roue droite (26) et au moins une deuxième roue droite (30),
et **en ce que** le moteur électrique (12) entraîne la première roue droite (26) directement et la deuxième roue droite (30) par l'intermédiaire d'au moins une roue intermédiaire (28),
et **en ce que** les axes de rotation (A₁, A₂, A₃) de la première roue droite (26), de la deuxième roue droite (30), de la roue intermédiaire (28) et du moteur électrique (12) sont parallèles,
et **en ce qu'**au moins un pignon (24) entraînant la première roue droite (26) et la roue intermédiaire (28), est prévu sur un arbre de sortie (22) du moteur électrique (12).

2. Servofrein électromécanique (10) selon la revendication 1,
dans lequel le dispositif d'actionnement (18) comprend au moins une section de crémaillère (40, 42) susceptible d'être accouplée à la transmission (16).

3. Servofrein électromécanique (10) selon la revendication 2,
dans lequel le dispositif d'actionnement (18) comprend une première (40) et une deuxième section de crémaillère (42) disposées sur des côtés opposés du dispositif d'actionnement (18).

4. Servofrein électromécanique (10) selon l'une des revendications 1 à 3,
dans lequel la première roue droite (26), la roue intermédiaire (28) et la deuxième roue droite (30) sont disposées dans un plan dans la direction axiale de l'axe de rotation (A₁) du moteur électrique (12).

5. Servofrein électromécanique (10) selon l'une des revendications 1 à 3,
dans lequel la première roue droite (26) et la roue intermédiaire (28) sont disposées de manière décalée l'une par rapport à l'autre dans la direction axiale de l'axe de rotation (A₁) du moteur électrique (12).

6. Servofrein électromécanique (10) selon la revendication 5,
dans lequel la deuxième roue droite (30) et la roue intermédiaire (28) sont situées dans un plan dans la direction axiale de l'axe de rotation (A₁) du moteur électrique (12).

7. Servofrein électromécanique (10) selon la revendication 4,
dans lequel ledit au moins un pignon (24) est situé dans un plan avec la première roue droite (26), la deuxième roue droite (30) et la roue intermédiaire (28) dans la direction axiale de l'axe de rotation (A₁) du moteur électrique (12).

8. Servofrein électromécanique (10) selon la revendication 5 ou 6,
dans lequel ledit au moins un pignon (24) est disposé de manière décalée par rapport à la première roue droite (26) dans la direction axiale de l'axe de rotation (A₁) du moteur électrique (12).

9. Servofrein électromécanique (10) selon la revendication 8,
dans lequel l'extension dudit au moins un pignon (24) dans la direction axiale de l'axe de rotation (A₁) du moteur électrique (12) recouvre au moins l'extension axiale des surfaces périphériques extérieures de la première roue droite (26) et de la roue intermédiaire (28).

10. Servofrein électromécanique (10) selon l'une des revendications 1 à 9,
dans lequel au moins la première roue droite (26), la deuxième roue droite (30) et la roue intermédiaire (28) comprennent une denture hélicoïdale.

11. Servofrein électromécanique (10) selon l'une des revendications 1 à 10,
dans lequel la première roue droite (26) et la deuxième roue droite (28) sont reliées chacune à un arbre (32, 34) qui comprend au moins une roue dentée respective (36, 38).

12. Servofrein électromécanique (10) selon l'une des revendications 1 à 11,
dans lequel le dispositif d'entraînement comprend au moins une unité de commande (14) qui est conçue pour commander ledit au moins un moteur électrique (12).

13. Servofrein électromécanique (10) selon l'une des revendications 1 à 12,
dans lequel le dispositif d'entraînement (14) peut être disposé à l'état monté dans un véhicule de telle sorte que l'axe de rotation (A₁) du moteur électrique (12) s'étende perpendiculairement à l'axe longitudinal (A_{L}) du dispositif d'actionnement (12) et selon un angle prédéterminé par rapport à l'axe vertical du véhicule.

14. Servofrein électromécanique (10) selon l'une des revendications 1 à 13,
dans lequel le dispositif d'actionnement (18) comprend au moins un premier élément d'actionnement (44) susceptible d'être sollicité par une force exercée sur une pédale de frein, et au moins un deuxième élément d'actionnement (46) entraîné par le moteur électrique (12) par l'intermédiaire de la transmission (16), et/ou
dans lequel le servofrein électromécanique (10) peut être monté sur un véhicule par l'intermédiaire d'au moins un dispositif de fixation (54), ledit au moins un dispositif de fixation (54) définissant un plan de fixation (BE) dans lequel est situé un axe longitudinal (A_{L}) dudit au moins un dispositif d'actionnement (18).

15. Système de freinage électrohydraulique de véhicule automobile comprenant un cylindre de frein (20) et un servofrein électromécanique (10) selon l'une des revendications 1 à 14, dans lequel le servofrein électromécanique (10) a pour effet d'actionner le cylindre de frein (20).
